Europäisches Patentamt

European Patent Office

Office européen des brevets

(19)

(11) Veröffentlichungsnummer : **0 452 988 B1**

(12) **EUROPÄISCHE PATENTSCHRIFT**

(45) Veröffentlichungstag der Patentschrift :
06.04.94 Patentblatt 94/14

(51) Int. Cl.⁵ : **C10M 107/34, C10M 145/36, C08G 65/28, // C10N70:00**

(21) Anmeldenummer : **91110522.9**

(22) Anmeldetag : **27.12.89**

(54) **Verfahren zur Herstellung von Addukten von 1,2-Butylenoxid an Alkohole.**

Die Akte enthält technische Angaben, die nach dem Eingang der Anmeldung eingereicht wurden und die nicht in dieser Patentschrift enthalten sind.

(30) Priorität : **29.12.88 DE 3844222**

(43) Veröffentlichungstag der Anmeldung :
**23.10.91 Patentblatt 91/43**

(45) Bekanntmachung des Hinweises auf die Patenterteilung :
**06.04.94 Patentblatt 94/14**

(84) Benannte Vertragsstaaten :
**AT BE CH DE ES FR GB IT LI NL SE**

(56) Entgegenhaltungen :
**BE-A- 651 607
US-A- 2 372 366
US-A- 2 782 240
DATABASE WPIL, AN=81-39143D, Derwent Publications Ltd, Londen, GB; & JP-A-56 038 351 (NIPPON SURFACTANT) 13-04-1981**

(60) Veröffentlichungsnummer der früheren Anmeldung nach Art. 76 EPü : **0 376 236**

(73) Patentinhaber : **BASF Aktiengesellschaft
Carl-Bosch-Strasse 38
D-67063 Ludwigshafen (DE)**

(72) Erfinder : **Oppenlaender, Knut, Dr.
Otto-Dill-Strasse 23
W6700 Ludwigshafen (DE)**
Erfinder : **Schwen, Roland, Dr.
Im Schlossgarten 7
W-6701 Friedelsheim (DE)**
Erfinder : **Baur, Richard, Dr.
Nelkenstrasse 1
W-6704 Mutterstadt (DE)**
Erfinder : **Gousetis, Charalampos, Dr.
Carl-Bosch-Strasse 99
W-6700 Ludwigshafen (DE)**
Erfinder : **Mohr, Jürgen, Dr.
Hochgewanne 48
W-6718 Gruenstadt (DE)**
Erfinder : **Mach, Helmut, Dr.
Dantestrasse 5
W-6900 Heidelberg (DE)**

EP 0 452 988 B1

## Beschreibung

Die Erfindung betrifft ein Verfahren zur Herstellung von Addukten von 1,2-Butylenoxid an Alkohole.

Polyalkylenglykole auf der Basis von Ethylenoxid und/oder Propylenoxid sind seit langem als Schmierstoffe bekannt und auf dem Markt eingeführt. Polyglykole auf Basis Ethylenoxid haben jedoch als Schmiermittel eine ungenügende Kältefestigkeit. Dagegen zeigen Polyglykole, die als Mischpolymerisate auf der Basis Ethylenoxid/Propylenoxid entwickelt worden sind, ein gutes Viskositäts- und Temperaturverhalten. Die Ethylen/Propylen-Mischpolymerisate sind wie die reinen Ethylenoxidaddukte in der Regel noch wasserlöslich. Daneben sind auf dem Markt als Polyalkylenglykole noch reine Propylenoxidaddukte eingeführt. Die reinen Polypropylenglykole sind zwar nicht wasserlöslich, sie haben jedoch wie die wasserlöslichen Polyethylenglykole und Polyethylen/Propylenglykole einen entscheidenden Nachteil, daß sie mit Mineralölen in der Kälte nicht vollständig mischbar sind.

In der DE-OS 14 44 840 werden Schmiermittel beschrieben, deren eine Komponente ein Addukt von Alkylenoxiden an Alkohole ist. Die Addukte werden in Gegenwart alkalischer Katalysatoren hergestellt, das Molverhältnis von Alkylenoxid zu Alkohol beträgt jedoch maximal 20 : 1.

Die US 2 782 240 offenbart ein Verfahren zur Herstellung von Alkalimetallsalzen von Monoethern von Polyoxyalkylenglykolen, bei dem u.a. Butylenoxid mit Alkoholen im Verhältnis von über 5:1, beispielsweise 11:1 umgesetzt wird.

Aus der US 3 829 505 ist es bekannt, daß sich 1,2-Butylenoxid in Gegenwart von KOH mit Alkoholen nicht zur höhermolekularen Addukten umsetzen läßt.

Der Erfindung lag daher die Aufgabe zugrunde, ein Verfahren zur Verfügung zu stellen, mit dem sich in einfacher Weise hochmolekulare Addukte von 1,2-Butylenoxid an Alkohole herstellen lassen.

Diese Aufgabe wird dadurch gelöst, daß der Alkohol als Starter in Gegenwart von Alkali mit 1,2-Butylenoxid in einem Molverhältnis 1,2-Butylenoxid zu Alkohol von über 20 : 1 umgesetzt wird.

Als Alkohole sind z.B. geeignet sekundäre und vorzugsweise primäre Alkohole der allgemeinen Formel $R_1$-OH, in der $R_1$ einen Alkylrest mit 1 bis 36, vorzugsweise 4 bis 24, insbesondere 6 bis 20 Kohlenstoffatomen bedeutet. Geeignete Alkohole sind beispielsweise Methanol, Ethanol, Propanol, Butanol, Pentanol, Hexanol, Octanol, Decylalkohol, Laurylalkohol, i-Tri-decanol, Myristylalkohol, Cetylalkohol, Stearylalkohol.

Die Herstellung der erfindungsgemäß zu verwendenden Addukte von 1,2-Butylenoxid an Alkohole erfolgt zweckmäßig in der Weise, daß ein Alkohol als Starter mit 1,2-Butylenoxid in Gegenwart von Alkali wie Natronlauge, Kalilauge, Natriummethylat, Kaliummethylat und anderen Alkali-Alkoholaten wie den Natrium- oder Kalium-Alkoholaten von aliphatischen Alkoholen mit 2 bis 5 Kohlenstoffatomen, z.B. Natrium- oder Kalium-tert.-butylat, vorzugsweise Kalilauge bei Temperaturen von 120 bis 160°C, vorzugsweise 130 bis 150°C, insbesondere 140 bis 150°C, zu den Addukten umgesetzt wird. Das Molverhältnis von 1,2-Butylenoxid zum Starter-Alkohol beträgt im allgemeinen von über 20:1 bis zu 500:1, vorzugsweise bis zu 400:1, insbesondere bis zu 300:1.

Es war überraschend, daß sich 1,2-Butylenoxid mit Alkali in einfacher Weise zu den erfindungsgemäß zu verwendenden Schmierstoffen umsetzen läßt, da aus der US-Patentschrift 3,829,505, Spalte 2, Zeilen 26 bis 28, bekannt ist, daß sich 1,2-Butylenoxid in Gegenwart von KOH mit Alkoholen nicht zu höhermolekularen Addukten umsetzen läßt.

Die erfindungsgemäße hergestellten Addukte werden in Schmierstoffen eingesetzt. Der Schmierstoff kann auch andere Komponenten enthalten, beispielsweise übliche Komponenten, z.B. Grundöle auf Mineralölbasis oder andere synthetische Schmiermittelkomponenten, beispielsweise Poly-$\alpha$-olefine. Die erfindungsgemäß hergestellten Addukte können einzeln oder in Mischung untereinander eingesetzt werden.

Die Schmierstoffe werden beispielsweise für Kfz-Motoren, Kfz-Getriebe mit Handschaltung, automatische Getriebe oder als Industrieschmierstoffe verwendet.

Mit den erfindungsgemäß hergestellten Addukten von 1,2-Butylenoxid an Alkohole lassen sich Schmierstoffe mit hohen Viskositäten, z.B. mit ISO-VG-Werten (kinematische Viskosität bei 40°C in $mm^2s^{-1}$) von 1500 erreichen. Dies ist überraschend, da sich mit entsprechenden Addukten von Propylenoxid an Alkohole lediglich Schmierstoffe mit ISO-VG-Werten von max. 460 erreichen lassen.

Die Erfindung wird durch die nachstehenden Beispiele weiter erläutert.

## 1. Herstellung der Addukte von 1,2-Butylenoxid an Alkohole

In einem Druckgefäß wird ein entwässertes Gemisch aus dem als Starter verwendeten Alkohol und KOH vorgelegt, wobei die eingesetzte KOH-Menge ca. 0,01 bis 1 Gew.%, vorzugsweise 0,05 bis 0,5 Gew.%, z.B. 0,1 Gew.% des zu erwartenden Gesamtgewichtes des Reaktionsproduktes beträgt. Man spült mehrmals mit Stickstoff, heizt auf 140 - 150°C und führt dann unter Rühren bei konstanter Temperatur und einem Druck zwischen 5 und 30 bar das 1,2-Butylenoxid kontinuierlich oder diskontinuierlich über Tauchrohr oder auf die Oberfläche zu, bis die gewünschte Viskosität erreicht ist. Man entfernt flüchtige Bestandteile, zweckmäßig im Vakuum, und klärt ggf. das Produkt durch Filtration.

2. Gemäß dem Herstellungsbeispiel 1 wurden folgende 1,2-Butylenoxid-Addukte erhalten:

| Produkt | Viskosität bei | | | VI |
|---|---|---|---|---|
| | -20°C | +40°C | +100°C | |
| A 1,2-Butylenoxid an i-Tridekanol | 38000 | 225 | 27 | 154 |
| B 1,2-Butylenoxid an i-Tridekanol | 314000 | 1500 | 160 | 225 |

**Patentansprüche**

1. Verfahren zur Herstellung von Addukten des 1,2-Butylenoxids an Alkohole, dadurch gekennzeichnet, daß der Alkohol als Starter in Gegenwart von Alkali mit 1,2 Butylenoxid in einem Molverhältnis 1,2-Butylenoxid zu Alkohol von über 20 : 1 umgesetzt wird.

2. Verfahren nach Anspruch 1, dadurch gekennzeichnet, daß die Umsetzung mit einem Molverhältnis von über 20 : 1 bis 500 : 1 erfolgt.

3. Verfahren nach Anspruch 1, dadurch gekennzeichnet, daß die Umsetzung bei Temperaturen von 120°C bis 160°C erfolgt.

**Claims**

1. A process for the preparation of an adduct of 1,2-butylene oxide with an alcohol, wherein the alcohol is reacted as an initiator in the presence of an alkali with 1,2-butylene oxide in a molar ratio of 1,2-butylene oxide to alcohol of more than 20 : 1.

2. A process as claimed in claim 1, wherein the reaction is carried out using a molar ratio of from more than 20 : 1 to 500 : 1.

3. A process as claimed in claim 1, wherein the reaction is carried out at from 120 to 160°C.

**Revendications**

1. Procédé de préparation d'adduits de l'oxyde de 1,2-butylène et d'alcools, caractérisé en ce que l'on fait réagir l'alcool à titre d'amorceur en présence d'un alcali avec de l'oxyde de 1,2-butylène, dans le rapport molaire de l'oxyde de 1,2-butylène à l'alcool supérieur à 20:1.

2. Procédé suivant la revendication 1, caractérisé en ce que la réaction s'effectue dans un rapport molaire supérieur à 20:1 jusqu'à 500:1.

3. Procédé suivant la revendication 1, caractérisé en ce que la réaction s'effectue à des températures de 120 à 160°C.